# EUROPÄISCHE PATENTSCHRIFT

(11) **EP 0 753 426 B1**
(45) Veröffentlichungstag und Bekanntmachung des Hinweises auf die Patenterteilung: **18.10.2000**
(21) Anmeldenummer: 96110448.6
(22) Anmeldetag: 28.06.1996
(51) Int. Cl.: B60N 2/28, B60N 2/42

(54) **Aufsatz-Kindersitz**
Accessory children's seat
Siège d'enfant accessoire

(30) Priorität: 13.07.1995 DE 19525442
(43) Veröffentlichungstag der Anmeldung: 15.01.1997
(73) Patentinhaber: Van Riesen GmbH u. Co. KG, D-32130 Enger (DE)
(72) Erfinder: Friedrich, Matthias, 32120 Hiddenhausen (DE); Wölfl, Volkmar, 32602 Vlotho (DE)
(74) Vertreter: Vollmann, Heiko, Dipl.-Ing.

(56) Entgegenhaltungen:
- WO-A-95/02526
- WO-A-96/14219
- DE-A- 4 235 324
- DE-U- 9 112 752
- DE-U- 9 208 309
- DE-U- 9 409 377

## Beschreibung

Die Erfindung betrifft einen Aufsatz-Kindersitz gemäß den im Oberbegriff des Anspruches 1 aufgeführten Merkmalen.

Aufsatz-Kindersitze sind heutzutage zum Transport von Kindern in Kraftfahrzeugen vorgeschrieben, wenn das Kraftfahrzeug keine integrierten Kindersitze aufweist. Sie werden von der Baugröße in Gruppen unterteilt, die in Abhängigkeit von Größe und Alter des darin zu sichernden Kindes abgestuft sind. Die in Rede stehenden Aufsatz-Kindersitze werden insbesondere für die Gruppen I und größer eingesetzt, also für Kinder nach dem Säuglingsalter. Sie weisen in der Regel eine Sitzschale mit einer Sitzfläche und einer Rückenlehnenfläche sowie üblicherweise seitlichen Begrenzungsflächen auf. Bei komfortableren Modellen ist die Sitzschale zusätzlich in einem gesonderten Traggestell schwenkbar gelagert, um eine Sitz- und eine Schlafposition zu erhalten. Allen Ausführungen gemeinsam ist ein Gurtbandrückhaltesystem, in der Regel bestehend aus zwei Schultergurten und einem gemeinsamen Beckengurt sowie bei einigen Bauarten noch mit einem zusätzlichen Schrittgurt.

Der Kindersitz wird üblicherweise mit dem kraftfahrzeugeigenen Drei- oder Zweipunktgurt oder aber mit einem gesonderten Gurtsystem am Fahrzeug befestigt.

Auch auf dem Gebiet dieser Aufsatz- oder integrierten Kindersitze ist es bekannt, daß der Sitz mit dem integrierten Gurtband-rückhaltesystem allein noch keinen umfassenden Schutz gibt, da beispielsweise im Fall eines Frontalaufpralles des Fahrzeuges zwar das Kind im Sitz gehalten wird, jedoch der beim Kind vergleichsweise schwere Kopf nach vorn geworfen wird, wodurch der Halswirbelbereich unzulässig hohen Belastungen ausgesetzt werden kann. Es sind daher bereits Vorschläge bekannt, solche Aufsatz-Kindersitze mit einem vor dem Kind angeordneten Airbag auszustatten, um einen besseren Schutz zu erzielen.

Aus DE 91 12 752 U1 ist ein transportabler Airbag bekannt, der entweder rückseitig des Vordersitzes oder auf dem Schoß des Kindes tischartig angeordnet wird. Im ersten Fall ist in der Regel der Abstand zwischen dem Kopf des Kindes und dem Airbag zu groß, in letzterem Fall kann die für die ordnungsgemäße Funktion hier besonders wichtige bestimmungsgemäße Positionierung nicht sichergestellt werden. Im übrigen wird dieser Airbag wegen der bei Aufsatz-Kindersitzen der eingangs erwähnten Art üblichen Vier- oder Mehrpunktgurtsysteme nicht oder nur schwer anbringbar sein. Schließlich bildet der auf dem Schoß befindliche Airbag ein tischartiges Gebilde, so daß die Gefahr besteht, daß das Kind Spielzeug oder andere Gegenstände auf die Oberfläche legt. Diese würden jedoch im Fall des Auslösens geschoßartig auf das Kind geworfen, was unter allen Umständen zu vermeiden ist.

Aus DE 94 09 377 U1 ist ein Airbag in der Prallfläche eines Kindersitzes bekannt. Die Prallfläche ist seitlich angelenkt und aufklappbar, sie hält somit das Kind formschlüssig im Sitz fest. Die Oberseite ist, wie bei derartigen Systemen üblich, flach ausgestaltet. Diese tischartige Ausgestaltung stellt, wie schon vorbeschrieben, ein großes Gefahrenpotential dar, wenn Gegenstände darauf befindlich sind. Im übrigen sind diese das Kind formschlüssig im Sitz haltenden Bügel nach Kollisionen häufig schwierig zu öffnen, insbesondere weil die zur Hilfe eilenden Personen mit der Bedienung in der Regel nicht vertraut sind. Ein Entfernen des Kindes bei anliegendem Bügel ist jedoch hier nicht oder nur sehr schwer möglich. Im übrigen ist der Bügel insbesondere in kleinen Fahrzeugen schwierig zu handhaben.

Aus DE 92 08 309 U1 ist ein Aufsatz-Kindersitz bekannt, der einen hinter der Lehnenfläche angelenkten Bügel aufweist, der nach dem Einstieg des Kindes über dieses geschwenkt wird, so daß der darin befindliche Airbag vor dem Kind, also etwa im Schoßbereich zur Anlage kommt. Auch bei dieser Konstruktion stellt sich das Problem der Misuse-Sicherheit. Des weiteren stellt auch dieser Bügel ein Gefahrenpotential dar, da das Kind nach einem Unfall nur sehr schwer aus dem Sitz entfernbar ist, wenn z. B. dieser Bügel verklemmt ist oder die zur Hilfe eilende Person den Schwenkmechanismus nicht erkennt.

Aus DE 42 35 324 A1 ist ein kombiniertes Gurt-Airbag-Rückhaltesystem gemäß dem Oberbegriff des Anspruchs 1 bekannt, wobei die Airbag-Funktion lediglich zur sicheren Anlage des Gurtes und zur Polsterung desselben, nicht jedoch als Aufprallschutz im eigentlichen Sinne dient. Der Gurt ist daher airbagähnlich aufgebaut, weist jedoch gegenüber einem reinen Airbag ein deutlich reduziertes Volumen auf. Abgesehen davon, daß das dort beschriebene System schon aufgrund der komplizierten Gasführung sehr aufwendig und teuer ist, hat es zudem den Nachteil, daß die Schultergurte in einem gemeinsamen Brust-Kontaktpolster enden, mit dem sie fest verbunden sind. Das Anlegen der Schultergurte wird dadurch erheblich erschwert, da der Kopf des Kindes durch den zwischen Schultergurten und Brust-Kontaktpolster gebildeten Freiraum geführt werden muß. Entsprechendes gilt für das Entfernen der Schutzeinrichtung nach einem Unfall. Im übrigen weist das dort beschriebene Kinderrückhaltesystem nur sehr bedingt die Funktion eines Airbags auf, da das Innenvolumen der airbagartig ausgebildeten Schultergurte konstruktionsbedingt vergleichsweise klein ist.

Hiervon ausgehend liegt der vorliegenden Erfindung die Aufgabe zugrunde, einen gattungsgemäßen Aufsatz-Kindersitz unter Vermeidung der vorstehend erwähnten Nachteile so auszubilden, daß er einerseits konstruktiv einfach im Aufbau und andererseits zuverlässig und einfach in der Handhabung ist, auch beim Entfernen des Kindes nach einem Unfall.

Diese Aufgabe wird durch die im kennzeichnenden Teil des Anspruches 1 aufgeführten Merkmale erfüllt.

Der Airbag wird also am Ende eines sich zwischen den Beinen des Kindes erstreckenden und im Bereich unter der Sitzfläche verankerten Trägers angeordnet, und zwar so, daß der Airbag das knaufförmige freie Ende dieses Trägers bildet. Auf diese Weise kann das Kind nach dem Öffnen des Gurtes problemlos aus dem Sitz herausgehoben werden. Das kindersitzeigene Gurtband-Rückhaltesystem wird nicht beeinträchtigt und funktioniert völlig unabhängig von der Airbagfunktion. Es kann daher in üblicher Weise bedient werden. Der am Ende des Trägers angeordnete Airbag hingegen bietet den zusätzlichen gewünschten Aufprallschutz, wobei die Anordnung des Trägers unabhängig vom verwendeten Gurtband-Rückhaltesystem den gefürchteten Submarining-Effekt verhindert. Im übrigen ist bei dieser Anordnung eine Befestigung des Airbags mit vergleichsweise kurzem Hebel am Kindersitz möglich, was eine stabile Bauausführung mit vergleichsweise geringem konstruktivem Aufwand ermöglicht. Die Ausbildung des Airbags als knaufförmiges Ende des Trägers erleichtert dabei nicht nur den Ein- und Ausstieg sondern plaziert den Airbag in optimaler Stellung, wobei die knaufförmige Ausbildung sicherstellt, daß der Airbag nicht als Tisch- oder Ablagefläche mißbraucht wird und das daraus resultierende eingangs beschriebene Gefahrenpotential ausgeschaltet wird.

Wenn der Airbag von einer Arbeitsposition in eine Einstiegsposition verfahrbar angeordnet ist, so wird gemäß der Erfindung bevorzugt in beiden Positionen eine Verriegelung oder aber zumindest eine Arretierung dergestalt vorgesehen, daß in Arbeitsposition in Rückschlagrichtung des Airbags der Träger formschlüssig abgestützt ist. Im übrigen ist durch entsprechende Schalteranordnung dafür Sorge zu tragen, daß die Auslösung des Airbags nur in der Arbeitsposition erfolgen kann. Dies kann beispielsweise durch Schließen eines elektrischen Kontaktes in der Verbindungsleitung zur Treibladung des Airbags erfolgen, wenn dieser in die Arbeitsposition gebracht wird.

Bevorzugt wird der am Ende des Trägers angeordnete Airbag als Funktionseinheit bestehend aus dem eigentlichen Luftsack und dem das Gasvolumen bereitstellenden Treibsatz bestehen, die durch eine geeignete Verkleidung mit Sollbruchstelle abgeschlossen sind. Es ist dann lediglich eine elektrische Leitungsverbindung zum Airbag herzustellen, die bevorzugt innerhalb des Trägers geschützt geführt ist.

Eine besonders zweckmäßige Ausführung ergibt sich, wenn der Träger auch Teil des Gurtsystems bildet, indem ein Teil des Gurtschlosses am Träger befestigt ist. Dabei kann gurtsystemseitig der gegebenenfalls vorgesehene Schrittgurt entfallen und durch den Träger ersetzt werden. Es versteht sich, daß der Träger in diesem Fall so ausgebildet ist, daß er körpernah verläuft und entsprechende Polsterungen zumindest an der zum Kind weisenden Seite aufweist.

Wenn der Kindersitz schwenkbar ausgestaltet ist, d. h. aus einem Traggestell und einer darin schwenkbar gelagerten Sitzschale besteht, ist es zweckmäßig, den Träger sitzschalenseitig zu befestigen, damit unabhängig von der Schwenkstellung des Sitzes der Airbag in seiner bestimmungsgemäßen Position bleibt. Es ist denkbar, für extreme Schwenkstellungen eine Relativbewegung zwischen Sitzschale und Träger vorzusehen, um eine wirksame Stellung des Airbags unabhängig von der jeweiligen Schwenkposition des Sitzes zu gewährleisten.

Sowohl zur Erleichterung des Ein- und Ausstiegs des Kindes als auch zur schützenden Unterbringung des Airbags bei Nichtgebrauch des Sitzes kann es sinnvoll sein, den Träger schwenkbar anzulenken und mittels eines von der Seite oder von vorn zugänglichen Hebels zu schwenken. Dabei muß zumindest in der eingeschwenkten Stellung (Arbeitsposition) der Airbag verriegelt sein, d. h. in Rückschlagrichtung formschlüssig abgestützt. Je nach gewünschter Bewegungsart kann die Anlenkstelle im vorderen Bereich unter der Sitzfläche sein - dann erfolgt eine Schwenkbewegung um etwa 180° - oder unterhalb der Lehne - dann erfolgt praktisch nur noch eine Hubbewegung. In der Sitzfläche oder in der Vorderseite des Kindersitzes sollte eine Ausnehmung zur Aufnahme des Airbags vorgesehen sein, derart, daß dieser bündig in diese einführbar ist, so daß der Airbag innerhalb des Kindersitzes liegt.

Alternativ kann unter der Sitzfläche eine Führung für den Träger vorgesehen sein, innerhalb der der Träger verschiebbar angeordnet ist. Je nach Formgebung des Trägers kann mit einer solchen Führung eine Schub- und/oder Schwenkbewegung erreicht werden. Auch in diesem Fall ist gut zugänglich, bevorzugt an der Seite, ein Hebel vorzusehen, über den der Träger verfahrbar ist.

Die Erfindung ist nachfolgend anhand von in der Zeichnung dargestellten Ausführungsbeispielen näher erläutert. Es zeigen:
- Fig. 1a: in stark schematisierter Darstellung den Längsschnitt durch einen Kindersitz,
- Fig. 1b: die Vorderansicht des anhand von Fig. 1a dargestellten Kindersitzes,
- Fig. 2a: eine zweite Ausführung des Kindersitzes in Darstellung nach Fig. 1a,
- Fig. 2b: eine Vorderansicht des Kindersitzes nach Fig. 2a,
- Fig. 3a: eine dritte Ausführung des Kindersitzes in Darstellung nach Fig. 1a,
- Fig. 3b: eine Vorderansicht des Kindersitzes nach Fig. 3a und
- Fig. 4: in perspektivischer Ansicht den unteren Teil einer vierten Ausführungsvariante des Kindersitzes.

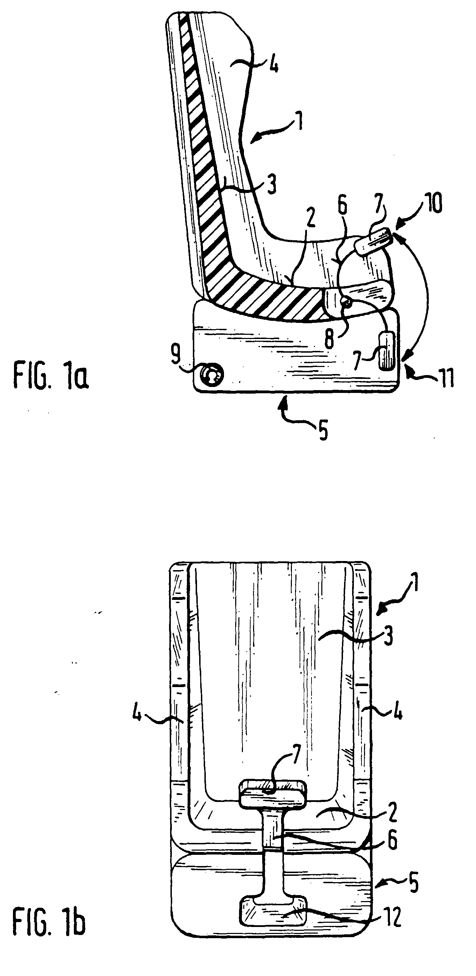

Der anhand der Figuren 1a und 1b schematisch dargestellte Aufsatz-Kindersitz besteht aus einer Sitzschale mit einer Sitzfläche 2 und einer Rückenlehnenfläche 3 für das darin zu transportierende Kind. Weiterhin weist die Sitzschale 1 seitliche Lehnen 4 auf. Die Sitzschale 1 ist schwenkbar auf einem Traggestell 5 angeordnet, das auf den Fahrzeugsitz gestellt wird. Je nach Bauausführung ist entweder nur das Traggestell 5 oder aber die Sitzschale 1 zusammen mit dem Traggestell 5 mittels eines Beckengurtes oder eines Dreipunktgurtes im Fahrzeug zu sichern. Diese Anbringungsarten sind bekannt und daher hier nicht weiter beschrieben.

Unter der Sitzfläche 2 ist an der Sitzschale 1 ein in Seitenansicht etwa C-förmiger Träger 6 an einem Ende schwenkbar befestigt. Das andere Ende des Trägers 6 trägt einen Airbag 7. Die Schwenkachse ist mit 8 gekennzeichnet. Der Airbag 7 besteht in an sich bekannter Weise aus einem Luftsack und einer Treibladung, die durch eine schützende Höhle zu einem am Ende des Trägers 6 gebildeten knaufartigen Körper abgeschlossen sind. Die Treibladung ist über eine durch den Träger 6 verlaufende elektrische Leitung mit einer Auslöseeinrichtung verbunden, die im Traggestell 5 des Sitzes integriert ist. Bei dem dargestellten Kindersitz ist der Airbag 7 mit sämtlichen Komponenten einschließlich einer Spannungsversorgung im Kindersitz untergebracht über einen Steckkontakt 9 kann der Sitz an die Spannungsversorgung des Kraftfahrzeuges angeschlossen werden. Alternativ kann anstelle der im Sitz integrierten Auslöseelektronik der Airbag 7 auch an die im Kraftfahrzeug vorhandene Auslöseelektronik angeschlossen werden.

Durch die Anlenkung um die Achse 8 kann der Träger 6 mit dem am Ende befindlichen Airbag 7 von einer Arbeitsposition 10 in eine Einstiegs- bzw. Ausstiegsposition 11 geschwenkt werden. In der Arbeitsposition 10 ist der Airbag 7 verriegelbar und in Auslösebereitschaft. Er liegt dann in der zum Schutz des Kindes günstigen Lage über den Oberschenkeln und vor dem Körper des Kindes. Zum Ausstieg oder zum Transport wird er in die Einstiegsposition 11 geschwenkt, in der die Auslöseelektronik gesperrt ist. Der Airbag 7 liegt dann geschützt in einer Ausnehmung 12 an der Vorderseite des Traggestelles 5. Das Ein- und Ausschwenken des Trägers 6 erfolgt über einen geeigneten Hebelmechanismus, der hier nicht im einzelnen dargestellt ist.

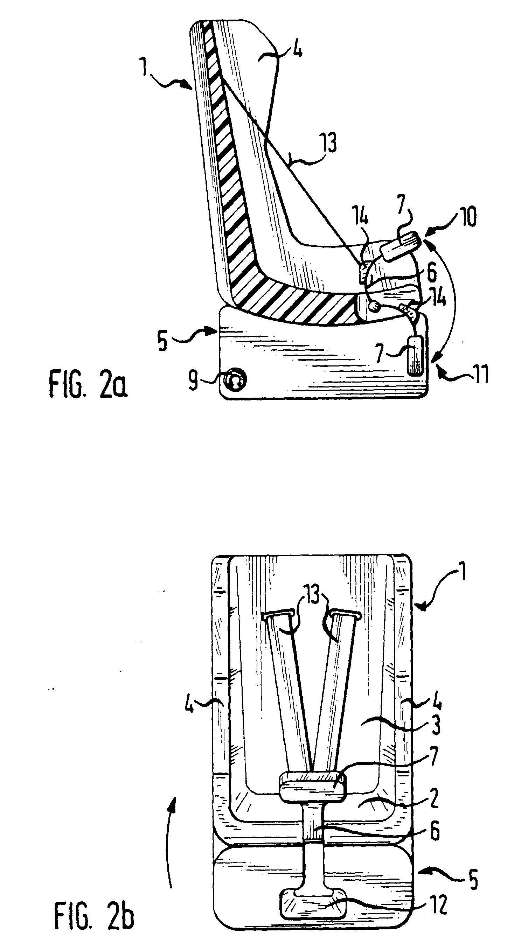

Die anhand der Figuren 2 dargestellte Ausführungsvariante unterscheidet sich von der vorbeschriebenen dadurch, daß der Träger 6 Teil des sitzschalenseitigen Gurtsystemes ist. Das Gurtsystem besteht bei dieser Ausführung aus zwei Schultergurten 13 und einem Schrittgurt, der durch den unteren Teil des Trägers 6 (in Stellung 10) gebildet wird. Am Träger 6 ist weiterhin der Aufnahmeteil 14 eines nicht im einzelnen dargestellten Gurtschlosses befestigt. In diesen Aufnahmeteil 14 können die am Ende der Schultergurte 13 angebrachten Einsteckteile eingeführt und in üblicher Wiese verriegelt werden. Diese Ausführungsvariante, die den Airbag 7 mit dem Gurtsystem funktioniell verbindet, stellt sicher, daß nach dem Anschnallen des Kindes im Sitz auch der Airbag 7 in seiner bestimmungsgemäßen Position 10 angeordnet ist, andernfalls ist ein Schließen des Gurtschlosses nicht möglich. In der Einstiegsposition 11 hingegen liegen sowohl das Aufnahmeteil 14 als auch der Airbag 7 geschützt innerhalb der Ausnehmung 12, was den Einstieg in den Sitz erleichtert und diese Bauteile vor unbeabsichtigter Beschädigung schützt.

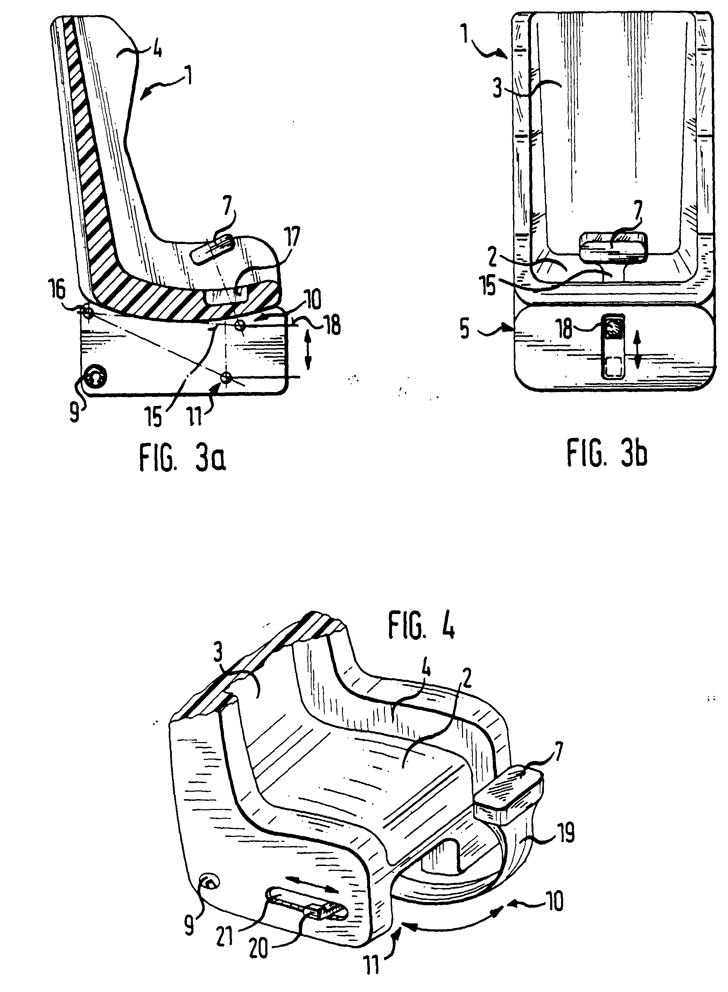

Die Ausführungsvariante nach Fig. 3 unterscheidet sich von den vorbeschriebenen durch die Anlenkung des Trägers. Der Träger 15, der in Fig. 3a nur hinsichtlich seiner geometrischen Anordnung dargestellt ist, weist in Seitenansicht etwa L-förmige Form auf und ist endseitig unter der Lehne der Sitzschale 1 um eine Achse 16 schwenkbeweglich angelenkt. Der Airbag 7, der um die Achse 16 schwenkbar ist, vollzieht bei seiner Schwenkbewegung von der Arbeitsposition 10 in die Einstiegsposition 11 im wesentlichen eine Hubbewegung, wobei er in eine Ausnehmung 17 in der Sitzfläche 2 der Sitzschale 1 einfährt. In dieser Einstiegsposition schließt der Airbag 7 bündig mit der Sitzfläche 2 ab. Die Betätigung erfolgt über einen an der Vorderseite des Traggestelles 5 herausragenden Hebel 18, der eine Verlängerung des langgestreckten unter der Sitzfläche 2 verlaufenden Teils des Trägers 15 darstellt. Der Hebel 18 ist an seiner Vorderseite mit einem Knauf versehen und ist mit einer Verriegelungsmechanik ausgestattet, welche dafür sorgt, daß der Träger 15 in Arbeitsposition 10 formschlüssig abgestützt ist.

Fig. 4 stellt eine weitere Ausführungsvariante dar. Der dort nur im unteren Bereich dargestellte Sitz, bei dem Sitzschale und Traggestell einstückig ausgebildet sind, weist ebenfalls eine Sitzfläche 2 und eine Lehnenfläche 3 sowie Seitenlehnen 4 auf. Der am Ende eines Trägers 19 angeordnete Airbag 7 ist ebenfalls aus einer Arbeitsposition 10 in eine Einstiegsposition 11 bringbar, in welcher der Airbag 7 geschützt in einer frontseitigen Ausnehmung unterhalb der Sitzfläche 2 liegt und deaktiviert ist. Der Träger 19 ist bogenförmig geformt und innerhalb des Sitzes unter der Sitzfläche 2 in einer entsprechend dem Querschnittsprofil des Trägers 19 profilierten Ausnehmung geführt und mit einem quer dazu verlaufenden Hebel 20 versehen, der durch eine seitliche Ausnehmung 21 im Sitz ragt. Über diesen Hebel 20, der zumindest in der Endstellung, in welcher der Airbag 7 die Arbeitsposition 10 einnimmt, verriegelbar ist, wird ein Aus- und Einschwenken des Airbags 7 ermöglicht.

## Patentansprüche

1. Aufsatz-Kindersitz für ein Kraftfahrzeug mit einer Sitzfläche (2) und einer Lehnenfläche (3) für das Kind und mit einem mit Abstand zu diesen Flächen angeordneten Airbag (7) als Aufprallschutz für das Kind im Falle einer Kollision des Fahrzeugs, der an einem Träger (6; 15; 19) angeordnet ist, welcher sich zwischen den Beinen des Kindes erstreckt und im Bereich unter der Sitzfläche (2) verankert ist, dadurch gekennzeichnet, daß der Airbag (7) ein knaufförmiges Ende des Trägers (6; 15; 19) bildet.

2. Kindersitz nach Anspruch 1, dadurch gekennzeichnet, daß der Airbag (7) aus seiner bestimmungsgemäßen Position (Arbeitsposition) (10) in eine den Ein- und Ausstieg in bzw. aus dem Sitz erleichternde Position (Einstiegsposition) (11) verbringbar ist, in der die Auslösung des Airbags (7) gesperrt ist.

3. Kindersitz nach einem der vorhergehenden Ansprüche, dadurch gekennzeichnet, daß die elektrische Leitung für den Zündimpuls der Treibladung geschützt durch den Träger (6; 15; 19) geführt ist.

4. Kindersitz nach einem der vorhergehenden Ansprüche, dadurch gekennzeichnet, daß der Träger (6) Teil eines Gurtsystems bildet, die Funktion eines Schrittgurtes übernimmt und einen Teil (14) des Gurtschlosses aufweist, der mit mindestens einem weiteren Schloßteil mindestens eines Becken- und/oder Schultergurtes (13) verbindbar ist.

5. Kindersitz nach einem der vorhergehenden Ansprüche, dadurch gekennzeichnet, daß er aus einem Traggestell (5) und einer darin schwenkbar gelagerten Sitzschale (1) besteht und daß der Träger (6; 15) an der Sitzschale (1) befestigt ist.

6. Kindersitz nach einem der vorhergehenden Ansprüche, dadurch gekennzeichnet, daß der Träger (6; 15) schwenkbar angelenkt und mittels eines von der Seite oder von vorne zugänglichen Hebels (18) in die Arbeitsposition (10) des Airbags (7) schwenkbar und in dieser verriegelbar ist.

7. Kindersitz nach einem der vorhergehenden Ansprüche, dadurch gekennzeichnet, daß der Träger (19) bogenförmig ausgebildet, in einer unter der Sitzfläche (2) angeordneten Führung geführt und mittels eines von der Seite oder von vorne zugänglichen Hebels (20) in die Arbeitsposition (10) des Airbags (7) verbringbar und in dieser verriegelbar ist.

8. Kindersitz nach einem der vorhergehenden Ansprüche, dadurch gekennzeichnet, daß der Airbag (7) in der Einstiegsposition (11) bündig in der Sitzfläche (2) oder der darunterliegenden Stirnseite des Kindersitzes liegt.

## Claims

1. An add-on child seat for a motor vehicle with a seat surface (2) and with a back rest surface (3) for the child and with an airbag (7) arranged at a distance to these surfaces, as an impact protection for the child in the case of a collision of the vehicle, which is arranged on a carrier (6;15; 19) which extends between the legs of the child and is anchored in the region below the seat surface (2), characterised in that the airbag (7) forms a knob-shaped end of the carrier (6; 15; 19).

2. A child seat according to claim 1, characterised in that the airbag (7) may be brought from its orderly position (operational position) (10) into a position (getting-in position (11)) simplifying the getting into and out of the seat, in which the release of the airbag (7) is blocked.

3. A child seat according to one of the preceding claims, characterised in that the electrical lead for the ignition impulse of the propellent charge is led protected through the carrier (6; 15; 19).

4. A child seat according to one of the preceding claims, characterised in that the carrier (6) forms part of the belt system, assumes the function of a crotch belt and comprises a part (14), of the belt lock, which is connectable to at least one further lock part of least of a lap and/or shoulder belt (13).

5. A child seat according to one of the preceding claims, characterised in that it consists of a carrier frame (5) and a seat shell (1) pivotably mounted therein, and that the carrier (6; 15) is fastened on the seat shell (1).

6. A child seat according to one of the preceding claims, characterised in that the carrier (6; 15) is pivotably linked on and by way of a lever (18) accessible from the side or from the front is pivotable into the operational position (10) of the airbag (7) and is lockable in this position.

7. A child seat according to one of the preceding claims, characterised in that the carrier (19) is formed arch-shaped, is guided in a guide arranged under the seat surface (2) and by way of a lever (20) accessible from the side or from the front is pivotable into the operational position (10) of the airbag (7) and is lockable in this position.

8. A child seat according to one of the preceding claims, characterised in that the airbag (7) in the getting-in position (11) lies flush in the seat surface (2) or in the end-face side, of the child seat, lying thereunder.

## Revendications

1. Siège rapporté pour enfant pour un véhicule automobile, possédant une surface d'assise (2) et une surface de dossier (3) pour l'enfant, et un air-bag (7) installé à distance de ces surfaces, en tant que dispositif de protection de l'enfant contre les chocs dans le cas d'une collision du véhicule, et disposé sur un support (6; 15; 19), qui s'étend entre les jambes de l'enfant et est ancré dans la zone située sous la surface d'assise (2), caractérisé en ce que l'air-bag (7) forme une extrémité en forme de bouton du support (6; 15; 19).

2. Siège pour enfant selon la revendication 1, caractérisé en ce que l'air-bag (7) peut être amené de sa position conforme aux spécifications (position de travail) (10) dans une position (position de mise en place) (11) qui facilite l'installation dans le siège et la sortie hors du siège et dans laquelle le déclenchement de l'air-bag (7) est bloqué.

3. Siège pour enfant selon l'une des revendications précédentes, caractérisé en ce que le conducteur électrique pour transmettre l'impulsion d'amorçage de la charge propulsive est guidé, d'une manière protégée, à travers le support (6; 15; 19).

4. Siège pour enfant selon l'une des revendications précédentes, caractérisé en ce que le support (6) fait partie d'un système de ceinture, assume la fonction d'une ceinture d'entrejambes et comporte une partie (14) du fermoir de la ceinture, qui peut être reliée à au moins une autre partie de fermoir d'au moins une ceinture abdominale et/ou d'une ceinture-baudrier (13).

5. Siège pour enfant selon l'une des revendications précédentes, caractérisé en ce qu'il est constitué par un châssis de support (5) et une coque de siège (1) montée de manière à pouvoir pivoter dans ce dernier et en ce que le support (6; 15) est fixé à la coque de siège (1).

6. Siège pour enfant selon l'une des revendications précédentes, caractérisé en ce que le support (6; 15) est articulé de manière à pouvoir pivoter et peut être placé par pivotement dans la position de travail (10) de l'air-bag (7) et être verrouillé dans cette position, au moyen d'un levier (18) accessible sur le côté ou sur l'avant.

7. Siège pour enfant selon l'une des revendications précédentes, caractérisé en ce que le support (19) est conçu sous une forme arquée, est guidé dans un guide disposé au-dessous de la surface d'assise (2) et peut, à l'aide d'un levier (20) accessible sur le côté ou sur l'avant, être amené dans la position de travail (10) de l'air-bag (7) et être verrouillé dans cette position.

8. Siège pour enfant selon l'une des revendications précédentes, caractérisé en ce que dans la position (11) de mise en place dans le siège, l'air-bag (7) est disposé de niveau dans la surface d'assise (2) ou dans la face frontale, située en dessous, du siège pour enfant.
